# EUROPÄISCHE PATENTSCHRIFT

(11) **EP 4 197 632 B1**
(45) Veröffentlichungstag und Bekanntmachung des Hinweises auf die Patenterteilung: **31.07.2024**
(21) Anmeldenummer: 21215359.7
(22) Anmeldetag: 17.12.2021
(51) Int. Cl.: B01J 31/02, B01J 31/24

(54) **PT-KOMPLEX-GEMISCH MIT IOD UND CHLOR**
PT-COMPLEX MIXTURE WITH IODINE AND CHLORINE
MÉLANGE DE COMPLEXE PT COMPORTANT DE L'IODE ET DU CHLORE

(43) Veröffentlichungstag der Anmeldung: 21.06.2023
(73) Patentinhaber: Evonik Oxeno GmbH & Co. KG, 45772 Marl (DE)
(72) Erfinder: SCHNEIDER, Carolin, 40789 Monheim am Rhein (DE); JACKSTELL, Ralf, 18106 Rostock (DE); BELLER, Matthias, 18211 Ostseebad Nienhagen (DE); FRANKE, Robert, 45772 Marl (DE)
(74) Vertreter: Evonik Patent Association

(56) Entgegenhaltungen:
- CN-A- 113 461 737
- BOTTEGHI C. ET AL: "Synthesis of 2-chromanol by hydroformylation of 2-hydroxystyrene derivatives", JOURNAL OF MOLECULAR CATALYSIS A: CHEMICAL., vol. 200, no. 1-2, 1 June 2003 (2003-06-01), NL, pages 147 - 156, XP055924922, ISSN: 1381-1169, Retrieved from the Internet <URL:https://www.sciencedirect.com/science/article/pii/S1381116903001213/pdfft?md5=2768ecee6bc7030cbc06418d714433c4&pid=1-s2.0-S1381116903001213-main.pdf> DOI: 10.1016/S1381-1169(03)00121-3
- BEHR A ET AL: "Selective catalytic formation of unsaturated amino acids from petrochemicals and carbon dioxide-Application of high-throughput catalyst screening", JOURNAL OF MOLECULAR CATALYSIS A: CHEMICAL, ELSEVIER, AMSTERDAM, NL, vol. 287, no. 1-2, 15 May 2008 (2008-05-15), pages 95 - 101, XP022667252, ISSN: 1381-1169, [retrieved on 20080219], DOI: 10.1016/J.MOLCATA.2008.02.011

## Beschreibung

Die vorliegende Erfindung betrifft eine Pt-Komplex-Gemisch mit lod und Chlor, sowie dessen Einsatz in der Katalyse.

In C. Botteghi et al., Journal of Molecular Catalysis A: Chemical 200, (2003), 147-156 wird der Einsatz von Pt(Xantphos)Cl₂ zur Hydroformylierung von 2-Tosyloxystyrol beschrieben.

Der vorliegende Erfindung lag die Aufgabe zugrunde, einen neues Katalysatorsystem bereitzustellen. Mit diesem Katalysatorsystem sollen Olefine zu Alkoholen umgesetzt werden. Hierbei soll eine gute Ausbeute erzielt werden.

Diese Aufgabe wird gelöst durch eine Komplex-Gemisch gemäß Anspruch 1.

Komplex-Gemisch umfassen:
a) einen ersten Komplex (**K1**) umfassend:
   a1) Pt;
   a2) einen Liganden entsprechend der Formel (**I**): 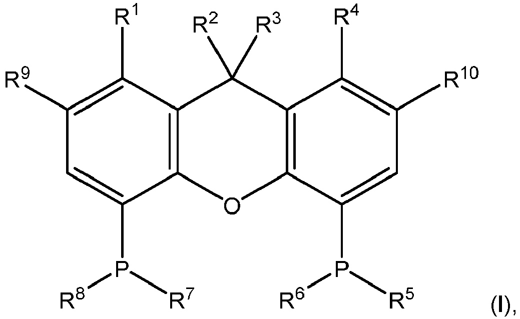 wobei R¹, R², R³, R⁴, R⁵, R⁶, R⁷, R⁸, R⁹, R¹⁰ ausgewählt sind aus: -H, -(C₁-C₁₂)-Alkyl, -(C₆-C₂₀)-Aryl, und für den Fall, dass R¹, R², R³, R⁴, R⁵, R⁶, R⁷, R⁸, R⁹, R¹⁰ für -(C₆-C₂₀)-Aryl stehen, kann der Arylring Substituenten aufweisen, welche ausgewählt sind aus: -(C₁-C₁₂)-Alkyl, -O-(C₁-C₁₂)-Alkyl;
   a3) einen lod-Liganden oder Chlor-Liganden;
b) einen zweiten Komplex (**K2**) umfassend:
   b1) Pt;
   b2) einen Liganden entsprechend der Formel (**II**): 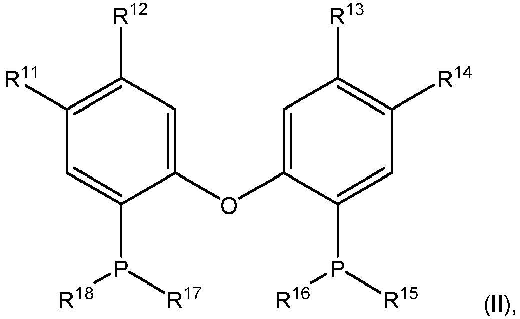 wobei R¹¹, R¹², R¹³, R¹⁴, R¹⁵, R¹⁶, R¹⁷, R¹⁸ ausgewählt sind aus: -H, -(C₁-C₁₂)-Alkyl, -(C₆-C₂₀)-Aryl; und für den Fall, dass R¹¹, R¹², R¹³, R¹⁴, R¹⁵, R¹⁶, R¹⁷, R¹⁸ für -(C₆-C₂₀)-Aryl stehen, kann der Arylring Substituenten aufweisen, welche ausgewählt sind aus: -(C₁-C₁₂)-Alkyl, -O-(C₁-C₁₂)-Alkyl;
   b3) einen lod-Liganden oder Chlor-Liganden, wobei es sich bei dem Halogen-Liganden um den handelt, welche in a3) nicht gewählt wurde;
   wobei das Komplex-Gemisch ein Verhältnis von (**K1**) zu (**K2**) von 1:1 aufweist.

Die Merkmale a3) und b3) sind so zu lesen, dass für den Fall, dass in (**K1**) ein lod-Ligand vorliegt, in (**K2**) ein Chlor-Ligand gewählt wird, beziehungsweise umgekehrt. Das Gemisch weist also in jedem Fall einen Komplex im lod-Liganden und einen Komplex mit Chlor-Liganden auf.

Der Begriff (C₁-C₁₂)-Alkyl umfasst geradkettige und verzweigte Alkylgruppen mit 1 bis 12 Kohlenstoffatomen. Vorzugsweise handelt es sich dabei um (C₁-C₈)-Alkylgruppen, besonders bevorzugt (C₁-C₆)-Alkyl, am meisten bevorzugt (C₁-C₄)-Alkyl.

Geeignete (C₁-C₁₂)-Alkylgruppen sind insbesondere Methyl, Ethyl, Propyl, Isopropyl, *n*-Butyl, *iso*-Butyl, *sec*-Butyl, *tert*-Butyl, *n*-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,1-Dimethylbutyl, 1,2-Dimethylbutyl, 2,2-Dimethylbutyl, 1,3-Dimethylbutyl, 2,3-Dimethylbutyl, 3,3-Dimethylbutyl, 1,1,2-Trimethylpropyl, 1,2,2-Trimethylpropyl, 1-Ethylbutyl, 1-Ethyl-2-methylpropyl, n-Heptyl, 2-Heptyl, 3-Heptyl, 2-Ethylpentyl, 1-Propylbutyl, n-Octyl, 2-Ethylhexyl, 2-Propylheptyl, Nonyl, Decyl.

Der Begriff (C₆-C₂₀)-Aryl umfasst mono- oder polycyclische aromatische Kohlenwasserstoffreste mit 6 bis 20 Kohlenstoffatomen. Vorzugsweise handelt es sich dabei um (C₆-C₁₄)-Aryl, besonders bevorzugt (C₆-C₁₀)-Aryl.

Geeignete (C₆-C₂₀)-Arylgruppen sind insbesondere Phenyl, Naphthyl, Indenyl, Fluorenyl, Anthracenyl, Phenanthrenyl, Naphthacenyl, Chrysenyl, Pyrenyl, Coronenyl. Bevorzugte (C₆-C₂₀)-Arylgruppen sind Phenyl, Naphthyl und Antracenyl.

In einer Ausführungsform sind R², R³, R⁵, R⁶, R⁷, R⁸ ausgewählt aus: -(C₁-C₁₂)-Alkyl, -(C₆-C₂₀)-Aryl.

In einer Ausführungsform stehen R⁵, R⁶, R⁷, R⁸ für -(C₆-C₂₀)-Aryl.

In einer Ausführungsform stehen R⁵, R⁶, R⁷, R⁸ für -Ph

In einer Ausführungsform stehen R² und R³ für -(C₁-C₁₂)-Alkyl.

In einer Ausführungsform stehen R² und R³ für -CH₃.

In einer Ausführungsform stehen R¹ und R⁴ für -H.

In einer Ausführungsform stehen R⁹ und R¹⁰ für -H.

In einer Ausführungsform weist der Liganden (**I**) die Struktur (**1**) auf:

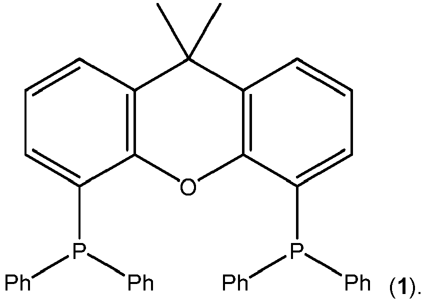

In einer Ausführungsform stehen R¹⁵, R¹⁶, R¹⁷, R¹⁸ für -(C₆-C₂₀)-Aryl.

In einer Ausführungsform stehen R¹⁵, R¹⁶, R¹⁷, R¹⁸ für -Ph.

In einer Ausführungsform stehen R¹¹ und R¹⁴ für-H.

In einer Ausführungsform stehen R¹² und R¹³ für -H.

In einer Ausführungsform weist der Liganden (**II**) die Struktur (**2**) auf:

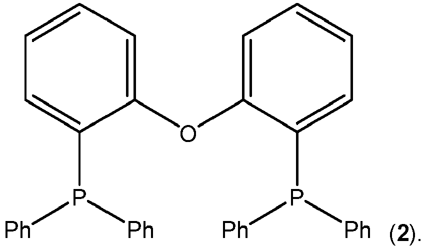

In einer Ausführungsform weist der Komplex (**K1**) genau einen Liganden entsprechend der Formel (**I**) auf.

In einer Ausführungsform weist der Komplex (**K2**) genau einen Liganden entsprechend der Formel (**II**) auf.

In einer Ausführungsform weist das Komplex-Gemisch ein Verhältnis von (**K1**) zu (**K2**) von 1:1 auf.

Neben dem Komplex-Gemisch an sich, wird auch ein Verfahren beansprucht, in welchem das Komplex-Gemisch als Katalysatorsystem zur Katalyse eingesetzt wird.

Verfahren umfassend die Verfahrensschritte:
A) Vorlegen eines Olefins;
B) Zugabe eines Komplex-Gemisches wie zuvor beschrieben, oder dessen Komponenten:
   B1) eine Pt-Verbindung;
   B2) einen Liganden entsprechend der Formel (I): 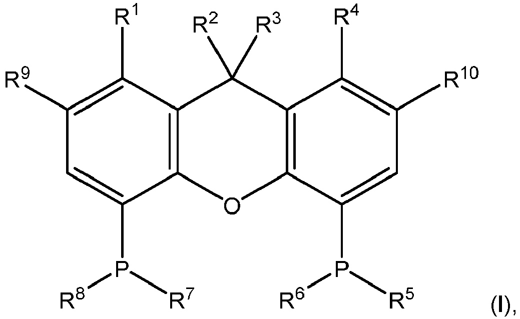 wobei R¹, R², R³, R⁴, R⁵, R⁶, R⁷, R⁸, R⁹, R¹⁰ ausgewählt sind aus: -H, -(C₁-C₁₂)-Alkyl, -(C₆-C₂₀)-Aryl, und für den Fall, dass R¹, R², R³, R⁴, R⁵, R⁶, R⁷, R⁸, R⁹, R¹⁰ für-(C₆-C₂₀)-Aryl stehen, kann der Arylring Substituenten aufweisen, welche ausgewählt sind aus: -(C₁-C₁₂)-Alkyl, -O-(C₁-C₁₂)-Alkyl;
   B3) einen Liganden entsprechend der Formel (II): 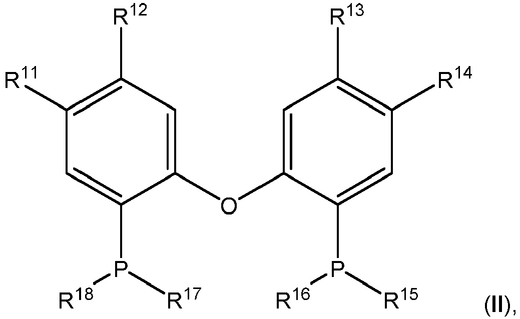 wobei R¹¹, R¹², R¹³, R¹⁴, R¹⁵, R¹⁶, R¹⁷, R¹⁸ ausgewählt sind aus: -H, -(C₁-C₁₂)-Alkyl, -(C₆-C₂₀)-Aryl; und für den Fall, dass R¹¹, R¹², R¹³, R¹⁴, R¹⁵, R¹⁶, R¹⁷, R¹⁸ für -(C₆-C₂₀)-Aryl stehen, kann der Arylring Substituenten aufweisen, welche ausgewählt sind aus: -(C₁-C₁₂)-Alkyl, -O-(C₁-C₁₂)-Alkyl;
   B4) eine lod-Verbindung und eine Chlor-Verbindung; wobei das Komplex-Gemisch ein Verhältnis von (**K1**) zu (**K2**) von 1:1 aufweist.
C) Zuführen von CO und H₂;
D) Erwärmen des Reaktionsgemisches aus A) bis C), wobei das Olefin zu einem Alkohol umgesetzt wird.

Alle Ausführungen bezüglich Ausführungsformen des Komplex-Gemisches gelten analog für das Komplex-Gemisch bzw. deren Komponenten im Verfahren.

In einer Variante des Verfahrens umfasst dieses den zusätzlichen Verfahrensschritt C`): C') Zugabe eines Lösungsmittels.

In einer Variante des Verfahrens ist das Lösungsmittel ausgewählt aus: THF, DCM, ACN, Heptan, DMF, Toluol, Texanol, Pentan, Hexan, Octan, Isooctan, Decan, Dodecan, Cyclohexan, Benzen, Xylene, Marlotherm, Propylencarbonat, MTBE, Diglyme, Triglyme, Diethylether, Dioxan, Isopropanol, Tertbutanol, Isononanol, Isobutanol, Isopentanol, Ethylacetat.

In einer Variante des Verfahrens ist das Lösungsmittel ausgewählt aus: THF, DCM, ACN, Heptan, DMF, Toluol, Texanol.

In einer Variante des Verfahrens ist die Pt-Verbindung in Verfahrensschritt B1) ausgewählt ist aus: Pt(II)I₂, Pt(II)Cl₂, Pt(IV)I₄, Pt(IV)Cl₄, H₂PtCl₃ xH₂O, H₂PtCl₄, Pt(NH₃)₄Cl₂xH₂O, Pt(II)Cl₂(Ethylendiamin), Pt(II)Cl₂(PPh₃)₂, Pt(II)Cl₂(COD), Diphenyl(1,5-COD)Pt(II), Pt(II)(acac)₂, Pt(0)(PPh₃)₄, Pt(0)(DVTS)-Lösung (CAS: 68478-92-2), Pt(0)(Ethylen)(PPh₃)₂, Pt(II)Br₂(COD), Tris(benzylidenaceton)Pt(0), Pt(II)(OAC)₂-Lösung, Pt(0)(t-Bu)₂, Pt(II)Cl₂(Benzonitril)₂, Pt(II)Cl₂(py)₂, Pt(II)(COD)Me₂, Pt(II)(COD)I₂, Pt(IV)IMe₃, Pt(II)(Hexafluoroacetylacetonat)₂.

In einer Variante des Verfahrens ist die Pt-Verbindung in Verfahrensschritt B1) ausgewählt ist aus: Pt(II)I₂, Pt(II)Cl₂.

In einer Variante des Verfahrens ist die lod-Verbindung beziehungsweise die Chlor-Verbindung in Verfahrensschritt B4) ausgewählt aus: Alkalihalogenid, Erdalkalihalogenid, NH₄X, Alkylammoniumhalogenid, Dialkylhalogenid, Trialkylhalogenid, Tetraalkylhalogenid, Cycloalkylammoniumhalogenid.

In einer Variante des Verfahrens sind die lod-Verbindung und Chlor-Verbindung in Verfahrensschritt B4) Pt(II)I₂ und Pt(II)Cl₂.

In einer Variante des Verfahrens erfolgt das Zuführen von CO und H₂ bei einem Druck in einem Bereich von 1 MPa (10 bar) bis 6 MPa (60 bar).

In einer Variante des Verfahrens erfolgt das Zuführen von CO und H₂ bei einem Druck in einem Bereich von 1 MPa (20 bar) bis 6 MPa (50 bar).

In einer Variante des Verfahrens erfolgt das Erwärmen auf eine Temperatur im Bereich von 50 °C bis 200°C.

In einer Variante des Verfahrens erfolgt das Erwärmen auf eine Temperatur im Bereich von 80 °C bis 170°C.

In einer Variante des Verfahrens ist das Olefin ausgewählt aus: Ethen, Propen, 1-Buten, cis- und/oder trans-2-Buten, iso-Buten, 1,3-Butadien, 1-Penten, cis- und/oder trans-2-Penten, 2-Methyl-1-buten, 3-Methyl-1-buten, 2-Methyl-2-buten, Hexen, Tetramethylethylen, Hepten, 1-Octen, 2-Octen, Di-n-Buten, oder Mischungen davon.

Im Folgenden soll die Erfindung anhand von Ausführungsbeispielen näher erläutert werden.

### Versuchsbeschreibung

Ein Vial wurde mit PtBr₂ und Ptl₂, Ligand (**1**) und Ligand (**2**), und einem im Ofen getrockneten Rührstab bestückt. Dann wird das Vial mit Septum (PTFE-beschichteter StyrolButadien-Kautschuk) und Phenolharzdeckel verschlossen. Das Vial wird dreimal evakuiert und mit Argon wieder befüllt. Mit einer Spritze wurden Toluol und 1-Octen in das Vial gegeben. Das Vial wurde in eine Legierungsplatte gestellt, die in einen Autoklav der Reihe 4560 von Parr Instruments unter Argon Atmosphäre überführt wurde. Nach dreimaligem Spülen des Autoklaven mit CO/H₂ wurde der Synthesegasdruck auf 40 bar bei Raumtemperatur erhöht. Die Reaktion wurde 20 h bei 150 °C durchgeführt. Nach Beendigung der Reaktion wurde der Autoklav auf Raumtemperatur abgekühlt und vorsichtig entspannt. Der Ausbeute und Selektivität wurden durch GC-Analyse bestimmt.

### Variation des Halogens

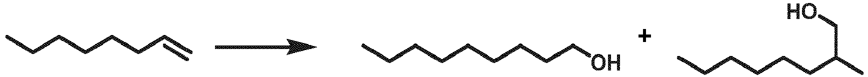

### Reaktionsbedingungen:

5.0 mmol 1-Octen, PtX₂ (X = Halogen), 1.1 Äquivalente DPEPhos (**2**), 1.1 Äquivalente Xantphos (**1**), Lösungsmittel: Toluol, p(CO/H₂): 40 bar, T: 150 °C, t: 20 h.

### Ausbeute an Alkohol:

1.0 mol% Ptl₂ + 1.0 mol% PtCl₂: 83%
2.0 mol% Ptl₂: 48%
2.0 mol% PtCl₂: 3 %

Wie die Versuchsergebnisse zeigen, wird die Aufgabe durch das erfindungsgemäße Komplex-Gemisch gelöst.

## Patentansprüche

1. Komplex-Gemisch umfassen:
a) einen ersten Komplex (**K1**) umfassend:
a1) Pt;
a2) einen Liganden entsprechend der Formel (**I**): 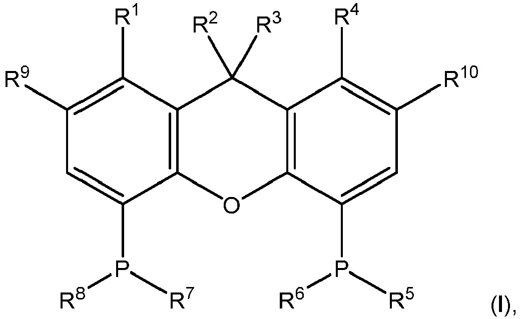 wobei R¹, R², R³, R⁴, R⁵, R⁶, R⁷, R⁸, R⁹, R¹⁰ ausgewählt sind aus: -H, -(C₁-C₁₂)-Alkyl, -(C₆-C₂₀)-Aryl, und für den Fall, dass R¹, R², R³, R⁴, R⁵, R⁶, R⁷, R⁸, R⁹, R¹⁰ für-(C₆-C₂₀)-Aryl stehen, kann der Arylring Substituenten aufweisen, welche ausgewählt sind aus: -(C₁-C₁₂)-Alkyl, -O-(C₁-C₁₂)-Alkyl;
a3) einen lod-Liganden oder Chlor-Liganden;
b) einen zweiten Komplex (**K2**) umfassend:
b1) Pt;
b2) einen Liganden entsprechend der Formel (**II**): 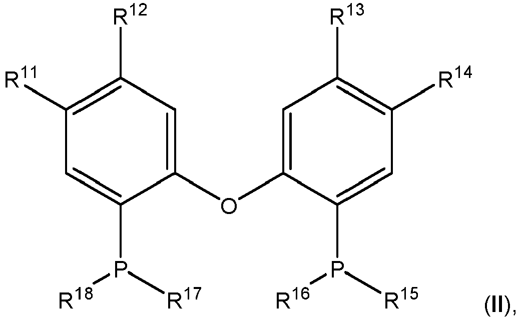 wobei R¹¹, R¹², R¹³, R¹⁴, R¹⁵, R¹⁶, R¹⁷, R¹⁸ ausgewählt sind aus: -H, -(C₁-C₁₂)-Alkyl, -(C₆-C₂₀)-Aryl; und für den Fall, dass R¹¹, R¹², R¹³, R¹⁴, R¹⁵, R¹⁶, R¹⁷, R¹⁸ für -(C₆-C₂₀)-Aryl stehen, kann der Arylring Substituenten aufweisen, welche ausgewählt sind aus: -(C₁-C₁₂)-Alkyl, -O-(C₁-C₁₂)-Alkyl;
b3) einen lod-Liganden oder Chlor-Liganden, wobei es sich bei dem Halogen-Liganden um den handelt, welche in a3) nicht gewählt wurde;
wobei das Komplex-Gemisch ein Verhältnis von (**K1**) zu (**K2**) von 1:1 aufweist.

2. Komplex-Gemisch nach Anspruch 1,
wobei R², R³, R⁵, R⁶, R⁷, R⁸ ausgewählt sind aus: -(C₁-C₁₂)-Alkyl, -(C₆-C₂₀)-Aryl.

3. Komplex-Gemisch nach einem der Ansprüche 1 oder 2,
wobei R² und R³ für -(C₁-C₁₂)-Alkyl stehen.

4. Komplex-Gemisch nach einem der Ansprüche 1 bis 3,
wobei der Liganden (I) die Struktur (**1**) aufweist:

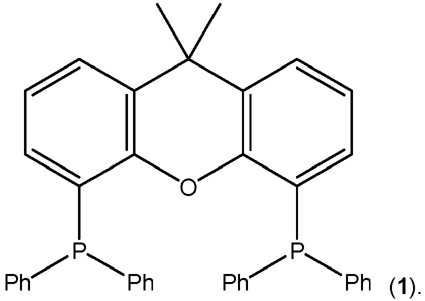

5. Komplex-Gemisch nach einem der Ansprüche 1 bis 4, wobei R¹⁵, R¹⁶, R¹⁷, R¹⁸ für -(C₆-C₂₀)-Aryl stehen.

6. Komplex-Gemisch nach einem der Ansprüche 1 bis 5, wobei R¹¹ und R¹⁴ für-H stehen.

7. Komplex-Gemisch nach einem der Ansprüche 1 bis 6, wobei R¹² und R¹³ für -H stehen.

8. Komplex-Gemisch nach einem der Ansprüche 1 bis 7, wobei der Liganden (**II**) die Struktur (**2**) aufweist:

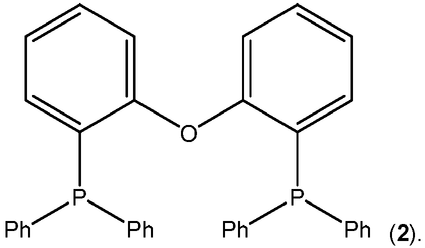

9. Verfahren umfassend die Verfahrensschritte:
A) Vorlegen eines Olefins;
B) Zugabe eines Komplex-Gemisches nach einem der Ansprüche 1 bis 8, oder dessen Komponenten:
B1) eine Pt-Verbindung;
B2) einen Liganden entsprechend der Formel (**I**): 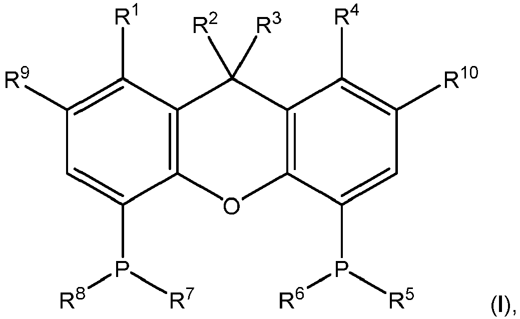 wobei R¹, R², R³, R⁴, R⁵, R⁶, R⁷, R⁸, R⁹, R¹⁰ ausgewählt sind aus: -H, -(C₁-C₁₂)-Alkyl, -(C₆-C₂₀)-Aryl, und für den Fall, dass R¹, R², R³, R⁴, R⁵, R⁶, R⁷, R⁸, R⁹, R¹⁰ für-(C₆-C₂₀)-Aryl stehen, kann der Arylring Substituenten aufweisen, welche ausgewählt sind aus: -(C₁-C₁₂)-Alkyl, -O-(C₁-C₁₂)-Alkyl;
B3) einen Liganden entsprechend der Formel (**II**): 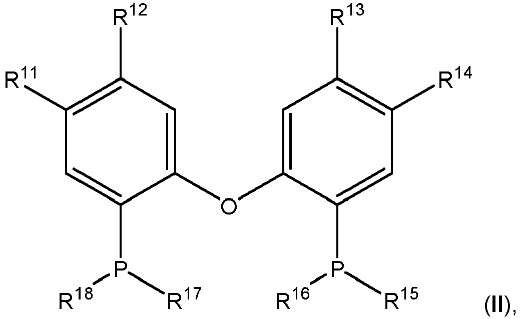 wobei R¹¹, R¹², R¹³, R¹⁴, R¹⁵, R¹⁶, R¹⁷, R¹⁸ ausgewählt sind aus: -H, -(C₁-C₁₂)-Alkyl, -(C₆-C₂₀)-Aryl; und für den Fall, dass R¹¹, R¹², R¹³, R¹⁴, R¹⁵, R¹⁶, R¹⁷, R¹⁸ für -(C₆-C₂₀)-Aryl stehen, kann der Arylring Substituenten aufweisen, welche ausgewählt sind aus: -(C₁-C₁₂)-Alkyl, -O-(C₁-C₁₂)-Alkyl;
B4) eine lod-Verbindung und eine Chlor-Verbindung;
wobei das Komplex-Gemisch ein Verhältnis von (**K1**) zu (**K2**) von 1:1 aufweist;
C) Zuführen von CO und H₂;
D) Erwärmen des Reaktionsgemisches aus A) bis C), wobei das Olefin zu einem Alkohol umgesetzt wird.

10. Verfahren nach Anspruch 9,
wobei das Verfahren den zusätzlichen Verfahrensschritt C') umfasst:
C') Zugabe eines Lösungsmittels.

11. Verfahren nach einem der Ansprüche 9 oder 10,
wobei die Pt-Verbindung in Verfahrensschritt B1) ausgewählt ist aus: Pt(II)I₂, Pt(II)Cl₂, Pt(IV)I₄, Pt(IV)Cl₄, H₂PtCl_{3 X}H₂O, H₂PtCl₄, Pt(NH₃)₄Cl₂xH₂O, Pt(II)Cl₂(Ethylendiamin), Pt(II)Cl₂(PPh₃)₂, Pt(II)Cl₂(COD), Diphenyl(1,5-COD)Pt(II), Pt(II)(acac)₂, Pt(0)(PPh₃)₄, Pt(0)(DVTS)-Lösung (CAS: 68478-92-2), Pt(0)(Ethylen)(PPh₃)₂, Pt(II)Br₂(COD), Tris(benzylidenaceton)Pt(0), Pt(II)(OAC)₂-Lösung, Pt(0)(t-Bu)₂, Pt(II)Cl₂(Benzonitril)₂, Pt(II)Cl₂(py)₂, Pt(II)(COD)Me₂, Pt(II)(COD)I₂, Pt(IV)IMe₃, Pt(II)(Hexafluoroacetylacetonat)₂.

12. Verfahren nach einem der Ansprüche 9 bis 11,
wobei die lod-Verbindung und Chlor-Verbindung in Verfahrensschritt B4) Pt(II)I₂ und Pt(II)Cl₂ sind.

13. Verfahren nach einem der Ansprüche 9 bis 12,
wobei das Zuführen von CO und H₂ bei einem Druck in einem Bereich von 1 MPa (10 bar) bis 6 MPa (60 bar) erfolgt.

## Claims

1. Complex mixture comprising:
a) a first complex (K1) comprising:
a1) Pt;
a2) a ligand corresponding to formula (I): 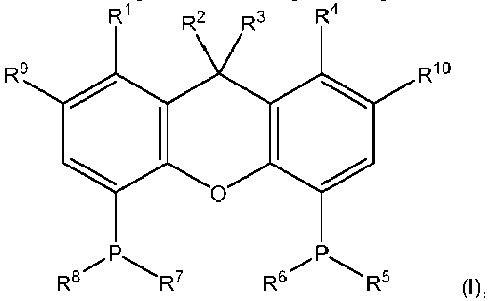 where R¹, R², R³, R⁴, R⁵, R⁶, R⁷, R⁸, R⁹, R¹⁰ are selected from: -H, -(C₁-C₁₂)-alkyl, -(C₆-C₂₀)-aryl, and, if R¹, R², R³, R⁴, R⁵, R⁶, R⁷, R⁸, R⁹, R¹⁰ are -(C₆-C₂₀)-aryl, the aryl ring may have substituents selected from: - (C₁-C₁₂)-alkyl, -O-(C₁-C₁₂) -alkyl;
a3) an iodine ligand or chlorine ligand;
b) a second complex (K2) comprising:
b1) Pt;
b2) a ligand corresponding to formula (II): 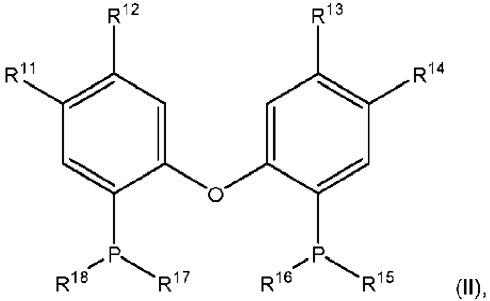 where R¹¹, R¹², R¹³, R¹⁴, R¹⁵, R¹⁶, R¹⁷, R¹⁸ are selected from: -H, -(C₁-C₁₂)-alkyl, -(C₆-C₂₀)-aryl; and, if R¹¹, R¹², R¹³, R¹⁴, R¹⁵, R¹⁶, R¹⁷, R¹⁸ are -(C₆-C₂₀) -aryl, the aryl ring may have substituents selected from: -(C₁-C₁₂)-alkyl, -O-(C₁-C₁₂)-alkyl;
b3) an iodine ligand or chlorine ligand, where the halogen ligand is the one that was not selected in a3);
wherein the complex mixture has a ratio of (K1) to (K2) of 1:1.

2. Complex mixture according to Claim 1,
wherein R², R³, R⁵, R⁶, R⁷, R⁸ are selected from: -(C₁-C₁₂)-alkyl, -(C₆-C₂₀)-aryl.

3. Complex mixture according to either of Claims 1 and 2,
wherein R² and R³ are -(C₁-C₁₂)-alkyl.

4. Complex mixture according to any of Claims 1 to 3, wherein the ligand (I) has the structure (1):

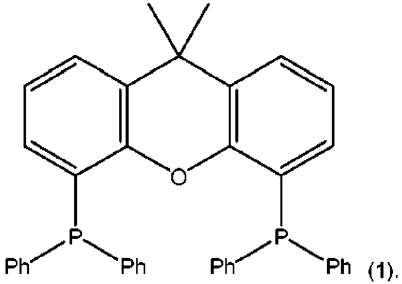

5. Complex mixture according to any of Claims 1 to 4, wherein R¹⁵, R¹⁶, R¹⁷, R¹⁸ are -(C₆-C₂₀) -aryl.

6. Complex mixture according to any of Claims 1 to 5, wherein R¹¹ and R¹⁴ are -H.

7. Complex mixture according to any of Claims 1 to 6, wherein R¹² and R¹³ are -H.

8. Complex mixture according to any of Claims 1 to 7, wherein the ligand (II) has the structure (2):

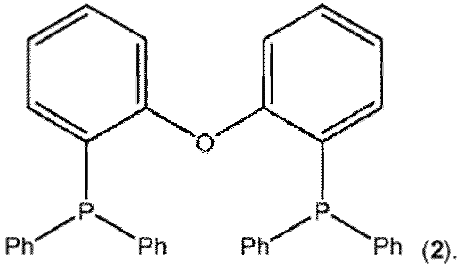

9. Process comprising the process steps of:
A) initially charging an olefin;
B) adding a complex mixture according to any of Claims 1 to 8, or the components thereof:
B1) a Pt compound;
B2) a ligand corresponding to formula (I): 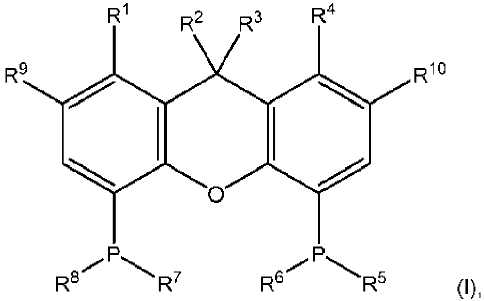 where R¹, R², R³, R⁴, R⁵, R⁶, R⁷, R⁸, R⁹, R¹⁰ are selected from: -H, -(C₁-C₁₂) -alkyl, -(C₆-C₂₀) -aryl, and, if R¹, R², R³, R⁴, R⁵, R⁶, R⁷, R⁸, R⁹, R¹⁰ are -(C₆-C₂₀)-aryl, the aryl ring may have substituents selected from: -(C₁-C₁₂)-alkyl, -O-(C₁-C₁₂) -alkyl;
B3) a ligand corresponding to formula (II): 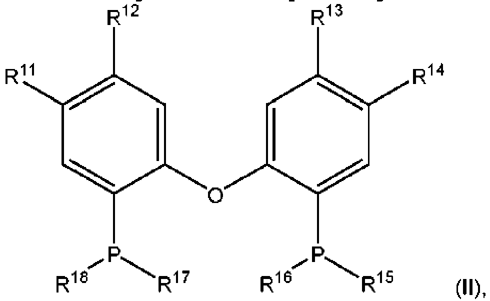 where R¹¹, R¹², R¹³, R¹⁴, R¹⁵, R¹⁶, R¹⁷, R¹⁸ are selected from: -H, -(C₁-C₁₂)-alkyl, -(C₆-C₂₀)-aryl; and, if R¹¹, R¹², R¹³, R¹⁴, R¹⁵, R¹⁶, R¹⁷, R¹⁸ are -(C₆-C₂₀) -aryl, the aryl ring may have substituents selected from: -(C₁-C₁₂)-alkyl, -O-(C₁-C₁₂)-alkyl;
B4) an iodine compound and a chlorine compound;
wherein the complex mixture has a ratio of (K1) to (K2) of 1:1;
C) feeding in CO and H₂;
D) heating the reaction mixture from A) to C), with conversion of the olefin to an alcohol.

10. Process according to Claim 9,
wherein the process comprises the additional process step C') :
C') adding a solvent.

11. Process according to either of Claims 9 and 10,
wherein the Pt compound in process step B1) is selected from: Pt(II)I₂, Pt(II)Cl₂, Pt(IV)I₄, Pt(IV)Cl₄, H₂PtCl₆xH₂O, H₂PtCl₄, Pt(NH₃)₄Cl₂xH₂O, Pt(II) Cl₂(ethylenediamine), Pt(II) Cl₂(PPh₃)₂, Pt(II) Cl₂(COD), diphenyl(1,5-COD)Pt(II), Pt(II)(acac)₂, Pt(0) (PPh₃)₄, Pt(0) (DVTS) solution (CAS: 68478-92-2), Pt(0) (ethylene) (PPh₃)₂, Pt(II)Br₂(COD), tris(benzylideneacetone)Pt(0), Pt(II)(OAC)₂ solution, Pt(0)(t-Bu)₂, Pt(II)Cl₂(benzonitrile)₂, Pt(II)Cl₂(py)₂, Pt(II)(COD)Me₂, Pt(II)(COD)I₂, Pt(IV)IMe₃, Pt(II)(hexafluoroacetylacetonate)₂.

12. Process according to any of Claims 9 to 11,
wherein the iodine compound and chlorine compound in process step B4) are Pt(II)I₂ and Pt(II)Cl₂.

13. Process according to any of Claims 9 to 12,
wherein CO and H₂ are fed in at a pressure in a range from 1 MPa (10 bar) to 6 MPa (60 bar).

## Revendications

1. Mélange de complexes, comprenant :
a) un premier complexe (K1) comprenant :
a1) du Pt ;
a2) un ligand selon la formule (I) : 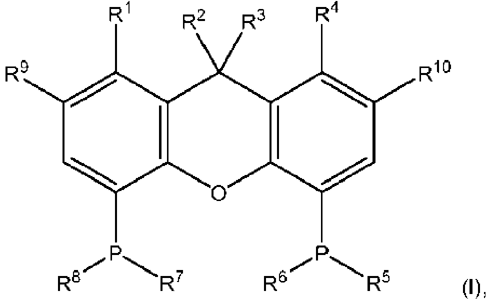 dans laquelle R¹, R², R³, R⁴, R⁵, R⁶, R⁷, R⁸, R⁹, R¹⁰ sont choisis parmi : -H, -(C₁-C₁₂) -alkyle, -(C₆-C₂₀) -aryle ; et pour le cas où R¹, R², R³, R⁴, R⁵, R⁶, R⁷, R⁸, R⁹, R¹⁰ représentent -(C₆-C₂₀) -aryle, le cycle aryle peut présenter des substituants qui sont choisis parmi : -(C₁-C₁₂)-alkyle, -O-(C₁-C₁₂) -alkyle ;
a3) un ligand iode ou un ligand chlore ;
b) un deuxième complexe (K2) comprenant :
b1) du Pt ;
b2) un ligand selon la formule (II) : 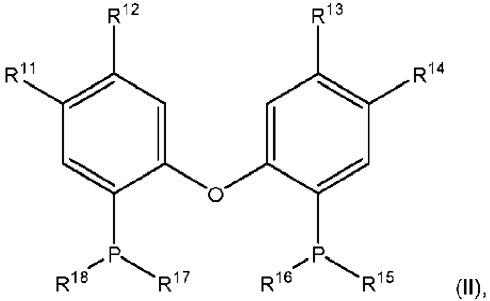 dans laquelle R¹¹, R¹², R¹³, R¹⁴, R¹⁵, R¹⁶, R¹⁷, R¹⁸ sont choisis parmi : -H, -(C₁-C₁₂) -alkyle, -(C₆-C₂₀) -aryle ; et pour le cas où R¹¹, R¹², R¹³, R¹⁴, R¹⁵, R¹⁶, R¹⁷, R¹⁸ représentent -(C₆-C₂₀) -aryle, le cycle aryle peut présenter des substituants qui sont choisis parmi : -(C₁-C₁₂)-alkyle, -O-(C₁-C₁₂) -alkyle ;
b3) un ligand iode ou un ligand chlore, le ligand halogène étant celui qui n'a pas été choisi dans a3) ;
le mélange de complexes présentant un rapport de (K1) à (K2) de 1:1.

2. Mélange de complexes selon la revendication 1,
R², R³, R⁵, R⁶, R⁷, R⁸ étant choisis parmi : -(C₁-C₁₂)-alkyle, -(C₆-C₂₀) -aryle.

3. Mélange de complexes selon l'une des revendications 1 ou 2,
R² et R³ représentant -(C₁-C₁₂) -alkyle.

4. Mélange de complexes selon l'une des revendications 1 à 3,
le ligand (I) présentant la structure (1) :

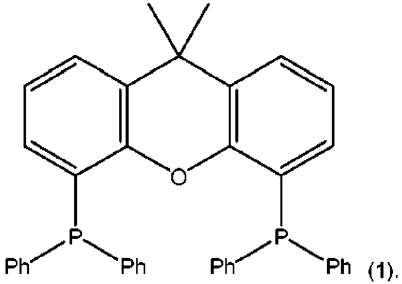

5. Mélange de complexes selon l'une des revendications 1 à 4,
R¹⁵, R¹⁶, R¹⁷, R¹⁸ représentant -(C₆-C₂₀) -aryle.

6. Mélange de complexes selon l'une des revendications 1 à 5,
R¹¹ et R¹⁴ représentant -H.

7. Mélange de complexes selon l'une des revendications 1 à 6,
R¹² et R¹³ représentant -H.

8. Mélange de complexes selon l'une des revendications 1 à 7,
le ligand (II) présentant la structure (2) :

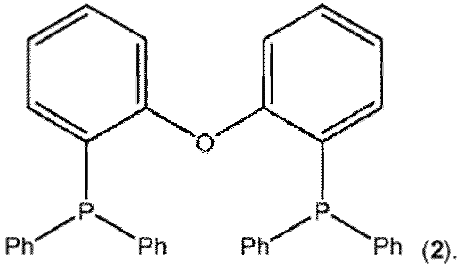

9. Procédé comprenant les étapes de procédé :
A) disposition préalable d'une oléfine ;
B) ajout d'un mélange de complexes selon l'une des revendications 1 à 8 ou de ses composants :
B1) un composé de Pt ;
B2) un ligand selon la formule (I) : 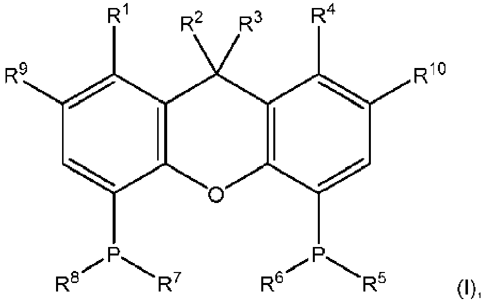 dans laquelle R¹, R², R³, R⁴, R⁵, R⁶, R⁷, R⁸, R⁹, R¹⁰ sont choisis parmi : -H, -(C₁-C₁₂) -alkyle, -(C₆-C₂₀) -aryle ; et pour le cas où R¹, R², R³, R⁴, R⁵, R⁶, R⁷, R⁸, R⁹, R¹⁰ représentent -(C₆-C₂₀) -aryle, le cycle aryle peut présenter des substituants qui sont choisis parmi : -(C₁-C₁₂)-alkyle, -O-(C₁-C₁₂) -alkyle ;
B3) un ligand selon la formule (II) : 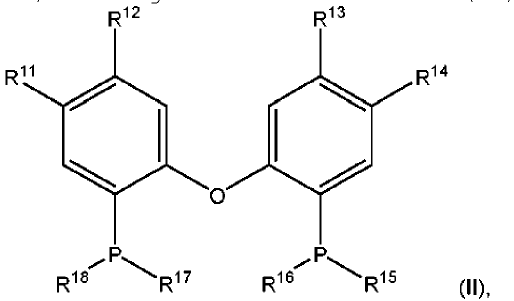 dans laquelle R¹¹, R¹², R¹³, R¹⁴, R¹⁵, R¹⁶, R¹⁷, R¹⁸ sont choisis parmi : -H, -(C₁-C₁₂) -alkyle, -(C₆-C₂₀) -aryle ; et pour le cas où R¹¹, R¹², R¹³, R¹⁴, R¹⁵, R¹⁶, R¹⁷, R¹⁸ représentent -(C₆-C₂₀) -aryle, le cycle aryle peut présenter des substituants qui sont choisis parmi : -(C₁-C₁₂)-alkyle, -O-(C₁-C₁₂) -alkyle ;
B4) un composé d'iode et un composé de chlore ;
le mélange de complexes présentant un rapport de (K1) à (K2) de 1:1 ;
C) introduction de CO et de H₂ ;
D) chauffage du mélange réactionnel provenant de A) à C), l'oléfine étant transformée en alcool.

10. Procédé selon la revendication 9,
le procédé comprenant l'étape de procédé C') supplémentaire :
C') ajout d'un solvant.

11. Procédé selon l'une des revendications 9 ou 10,
le composé de Pt dans l'étape de procédé B1) étant choisi parmi : Pt(II)I₂, Pt(II)Cl₂, Pt(IV)I₄, Pt(IV)Cl₄, H₂PtCl₆xH₂O, H₂PtCl₄, Pt(NH₃)₄Cl₂xH₂O, Pt(II)Cl₂(éthylènediamine), Pt(II)Cl₂(PPh₃)₂, Pt(II)Cl₂(COD), diphényl(1,5-COD)Pt(II), Pt(II)(acac)₂, Pt(0)(PPh₃)₄, solution de Pt(0) (DVTS) (CAS : 68478-92-2), Pt(0)(éthylène)(PPh₃)₂, Pt(II)Br₂(COD), tris(benzylidénacétone)Pt(0), solution de Pt(II)(OAc)₂, Pt(0)(t-Bu)₂, Pt(II)Cl₂(benzonitrile)₂, Pt(II)Cl₂(py)₂, Pt(II)(COD)Me₂, Pt(II)(COD)I₂, Pt(IV)IMe₃, Pt(II)(hexafluoroacétylacétonate)₂.

12. Procédé selon l'une des revendications 9 à 11,
le composé d'iode et le composé de chlore dans l'étape de procédé B4) étant Pt(II)I₂ et Pt(II)Cl₂.

13. Procédé selon l'une des revendications 9 à 12,
l'introduction de CO et de H₂ ayant lieu à une pression dans la plage de 1 MPa (10 bars) à 6 MPa (60 bars).
